# EUROPÄISCHE PATENTSCHRIFT

(11) **EP 2 057 220 B1**
(45) Veröffentlichungstag und Bekanntmachung des Hinweises auf die Patenterteilung: **07.04.2010**
(21) Anmeldenummer: 08786479.9
(22) Anmeldetag: 25.07.2008
(51) Int. Cl.: C08K 5/00, C08K 5/3492

(54) **FLAMMGESCHÜTZTES POLYMERMATERIAL**
FLAME-PROOFED POLYMER MATERIAL
MATÉRIAU POLYMÈRE IGNIFUGE

(30) Priorität: 28.07.2007 DE 102007035417
(43) Veröffentlichungstag der Anmeldung: 13.05.2009
(73) Patentinhaber: Chemische Fabrik Budenheim KG, 55257 Budenheim (DE)
(72) Erfinder: FUTTERER, Thomas, 55218 Ingelheim (DE); NÄGERL, Hans-Dieter, 67373 Dudenhofen (DE); FIBLA, Vincens Mans, E-08915 Badalona (ES); MENGEL, Siegfried, 55257 Budenheim (DE)
(74) Vertreter: WSL Patentanwälte
(86) Internationale Anmeldenummer: PCT/EP2008/059829
(87) Internationale Veröffentlichungsnummer: WO 2009/016129

(56) Entgegenhaltungen:
- DE-A1- 4 003 231
- DE-A1- 19 615 897
- US-A- 4 504 610
- US-A- 4 966 931
- US-A- 5 153 245

## Beschreibung

### Gegenstand der Erfindung

Die Erfindung betrifft ein Polymermaterial, welches ein halogenfreies Flammschutzmittel eingebettet in die Polymermatrix aufweist.

### Hintergrund der Erfindung

Thermoplastische Polymere, einschließlich thermoplastischer Elastomere, werden in zahlreichen Bereichen eingesetzt, beispielsweise im Elektrik- und Elektronikbereich, im Baubereich, in der Gebäudetechnik, beim KFZ-Bau und in öffentlichen Transportmitteln. Sie haben vorteilhafte mechanische Eigenschaften und besitzen gute Verarbeitbarkeit und chemische Beständigkeit. Eine Möglichkeit, derartige Polymere flammfest zu machen, ist der Zusatz halogenhaltiger Flammschutzmittel mit Antimontrioxid. Eine weitere Möglichkeit ist die Zugabe von halogenfreien Substanzen, wie Metallhydroxiden, organischen oder anorganischen Phosphaten oder Phosphonaten, beispielsweise Ammoniumpolyphosphaten zusammen mit synergistisch wirkenden Substanzen, wie Kohlenstofflieferanten und Treibmitteln.

Insbesondere die halogenfreien Flammschutzmittel gewinnen zunehmend an Bedeutung, da sie im Gegensatz zu Flammschutzmitteln, die chlorierte oder bromierte organische Verbindungen enthalten, im Brandfall eine geringere Rauchgasentwicklung bewirken und in der Regel als umweltfreundlich eingestuft werden. Unter den brandhemmenden Substanzen werden vor allem Derivate der Phosphorsäure, der Pyrophosphorsäure und der Polyphosphorsäuren in halogenfreien Flammschutzmitteln eingesetzt. Ammonium- und Melaminderivate der vorgenannten Substanzen sowie Piperazinphosphat und Ethylendiaminphosphat besitzen die Eigenschaft, sich bei hohen Temperaturen eingebettet in Formmassen zu voluminösen Schutzschichten aufzublähen und als Isolierschicht gegen eine Hitzequelle zu wirken. Diese Eigenschaft kann durch synergistisch wirkende Substanzen noch verstärkt werden. Das Aufblähen, die sogenannte Intumeszenz, verläuft im Gegensatz zur Wirkungsweise von halogenhaltigen Flammschutzmitteln ohne Entwicklung größerer Mengen an Rauchgasen.

Der Einsatz der oben genannten Flammschutzmittel in Polyolefinen verleiht häufig keinen ausreichenden Schutz und es müssen zusätzlich synergistisch wirkende Substanzen, wie z.B. Kohlenstofflieferanten und Blähmittel, hinzugefügt werden. Um eine ausreichende Wirksamkeit derartiger Flammschutzmittelzusammensetzungen zu gewährleisten, muss dabei häufig dem Polymer ein sehr hoher Anteil an Flammschutzmittel zugegeben werden, was zu einer Veränderung insbesondere der mechanischen und elektrischen Eigenschaften des Polymers führt.

Bisher gehören zu den besonders wirksamen Flammschutzmitteln Mischungen aus Ammoniumpolyphosphat mit Aminen, wie z.B. Mischungen mit Melaminverbindungen und/oder Pentaerythrit. Weitere bekannte intumeszierende Mischungen basieren auf Ammoniumpolyphosphaten in Kombination mit THEIC (1,3,5-Tris-hydroxyethylisocyanursäure).

Der Nachteil dieser Mischungen besteht jedoch darin, daß sie auch nach dem Einbringen in ein Polymer eine sehr hohe Wasserlöslichkeit aufweisen, so daß sie teilweise ausgewaschen werden und ihre Wirkung demzufolge nicht mehr entfalten können. Weiterhin haben sie eine niedrige Zersetzungstemperatur, die teilweise bereits beim Formen der Kunststoffgegenstände aus den zu schützenden Polymeren zu einer Zersetzung des Flammschutzzusatzes führt. Weiterhin müssen diese Mischungen trotz verbesserter Wirksamkeit in hohen Konzentrationen in einem Polymer eingesetzt werden, wodurch die Verarbeitbarkeit und Flexibilität des Polymers herabgesetzt wird.

### Aufgabe der Erfindung

Vor diesem Hintergrund bestand die Aufgabe der Erfindung darin, ein Polymermaterial, welches ein halogenfreies Flammschutzmittel eingebettet in die Polymermatrix aufweist, zur Verfügung zu stellen, bei dem das halogenfreie Flammschutzmittel gegenüber dem Stand der Technik verbesserte flammwidrige Wirkung besitzt, in geringeren Konzentrationen in einem Polymermaterial bei gleichzeitig guter flammwidriger Wirkung einsetzbar ist, eine geringe Wasserlöslichkeit aufweist und sich erst bei höheren Temperaturen als bekannte Flammschutzmittel, vorzugsweise oberhalb der Verarbeitungstemperatur der Polymere, zersetzt und das Polymermaterial gute Materialeigenschaften, gute Flammbeständigkeit und gleichzeitig eine gute Wasserbeständigkeit aufweist.

### Beschreibung der Erfindung

Erfindungsgemäß wird die Aufgabe durch ein Polymermaterial gelöst, welches ein halogenfreies Flammschutzmittel eingebettet in die Polymermatrix aufweist, wobei das Flammschutzmittel wenigstens die folgenden Komponenten A und B enthält:
A: Ammoniumpolyphosphat(e) der Kristallform II und/oder Derivate davon, die mit Melamin, Melaminharz, Melaminderivaten, Silanen, Siloxanen oder Polystyrolen beschichtete Partikel und/oder mit Melamin, Melaminharz, Melaminderivaten, Silanen, Siloxanen oder Polystyrolen beschichtete und vernetzte Partikel sind,
B: oligomeres oder polymeres 1,3,5-Triazinderivat oder Gemische von mehreren davon der allgemeinen Formel 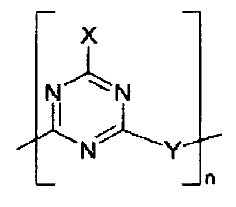 wobei
   X ein Morpholino-Rest, ein Piperidino-Rest oder eine von Piperazin abgeleitete Gruppe ist,
   Y eine zweiwertige, von Piperazin abgeleitete Gruppe ist und
   n eine ganze Zahl größer als 2 ist,
   und wenigstens eine unter den folgenden Komponenten C und D ausgewählte Verbindung enthält:
C: Phosphate, Pyrophosphate, Polyphosphate, organische und anorganische Phosphonate, organische und anorganische Phosphinate, Stannate, Molybdate oder Borate der Elemente der Hauptgruppen II, III, IV oder der Nebengruppenelemente Fe, Zn, Ti, Mn, Zr, Mo,
D: vorkondensierte Melaminderivate, Melaminsalze und -addukte, Ethylendiaminphosphat, Piperazinphosphat, Piperazinpolyphosphat, 1,3,5-Trihydroxyethylisocyanurat, 1,3,5-Triglycidylisocyanurat, Triallylisocyanurat,
wobei das Gewichtsverhältnis der Komponente A zu der Komponente B von 10:1 bis 1:1 beträgt und die Komponenten A und B zusammen 60 bis 99 Gew.-% und die Komponenten C und D zusammen 1 bis 40 Gew.-% des Gesamtgewichts der Komponenten A, B, C und D ausmachen,
wobei das Polymermaterial ein thermoplastisches Elastomer (TPE) ist.

In einer Ausführungsform der Erfindung enthält das Polymermaterial das halogenfreie Flammschutzmittel in einer Menge von 5 bis 60 Gew.-%, vorzugsweise in einer Menge von 10 bis 40 Gew.-%.

Komponente A umfaßt beschichtete(s) Ammoniumpolyphosphat(e) und/oder Derivate davon.

Dabei umfaßt der Begriff "beschichtete Ammoniumpolyphosphate" sowohl einfach beschichtetes Ammoniumpolyphosphat als auch beschichtetes und vernetztes Ammoniumpolyphosphat. Eine derartige Beschichtung bewirkt bei Zugabe des Flammschutzmittels zu einem Polymer, daß im Gegensatz zu unbeschichtetem Ammoniumpolyphosphat eine erhöhte thermische Stabilität, eine geringere Wasserlöslichkeit sowie eine verbesserte Kompatibilität zu der Polymermatrix erreicht wird, in der das Flammschutzmittel eingesetzt wird. Die Komponente A ist durch Beschichtung eines Pulvers oder Granulats von Ammoniumpolyphosphat oder eines Derivats davon erhältlich.

Die Komponente A wird dem Flammschutzmittel als Pulver oder Granulat zugefügt und verursacht im Brandfall deutlich weniger Rauchgase als halogenhaltige Flammschutzmittel.

Komponente B ist ein Oligomer oder Polymer eines 1,3,5-Triazinderivates oder ein Gemisch mehrerer davon und eine in Kombination mit Phosphaten ebenfalls flammwidrig wirkende Substanz. Komponente B wird durch hohe Hitzeeinwirkung oder Kontakt mit einer Flamme unter Erzeugung von nicht entflammbaren Gasen, einschließlich Wasser, Kohlenstoffdioxid, Ammoniak und Stickstoff, unter Bildung eines kohlenstoffhaltigen Restes zersetzt. Die Komponente B wirkt als Kohlenstofflieferant in der erfindungsgemäßen intumeszierenden Mischung.

Das Gewichtsverhältnis der Komponenten A und B von 10:1 bis 1:1 bewirkt eine optimale flammwidrige Wirkung. Ein geringerer oder höherer Anteil der Komponente B würde die Wirksamkeit des Flammschutzmittels herabsetzten. Bevorzugt beträgt in diesem Zusammenhang das Gewichtsverhältnis der Komponente A zu der Komponente B von 6:1 bis 2:1 und besonders bevorzugt von 5:1 bis 3:1. Weiterhin bevorzugt ist es, wenn die Komponenten A und B zusammen von 85 bis 99 Gew.-% und besonders bevorzugt von 90 bis 95 Gew.-% und die Komponenten C und D zusammen bevorzugt von 1 bis 15 Gew.-% und besonders bevorzugt von 5 bis 10 Gew.-% des Gesamtgewichts der Komponenten A, B, C und D ausmachen.

Komponente C enthält Stoffe, insbesondere Salze, die in dem erfindungsgemäßen Flammschutzmittel eine weitere Reduzierung der Rauchgasentwicklung bewirken. Dadurch wird die durch Rauchgas vermittelte Toxizität bei Bränden deutlich reduziert und gleichzeitig die Wirkung des Flammschutzmittels verbessert. Diese Komponente bewirkt überdies eine höhere Effizienz des Flammschutzmittels und verbesserte mechanische Eigenschaften des Polymers, in dem das Flammschutzmittel eingesetzt wird.

Komponente D enthält vorkondensierte Melaminderivate und/oder Melaminsalze und -addukte, Ethylendiaminphosphat, Piperazinphosphat, Piperazinpolyphosphat, 1,3,5-Trihydroxyethylisocyanurat, 1,3,5-Triglycidylisocyanurat, Triallylisocyanurat oder Gemische davon. Beispiele für vorkondensierte Melaminderivate sind Melem, Melon, Melam, Melamincyanurat, Melaminborat, Melaminorthophosphat, Melaminpyrophosphat, Dimelaminpyrophosphat und Melaminpolyphosphat.

Die Verbindungen der Komponente D wirken als Treibmittel. Die vorkondensierten Melaminderivate und/oder Melaminsalze und -addukte sind so stabil, daß während der Verarbeitung eines Kunststoffs, der das Flammschutzmittel enthält, eine Kondensationsreaktion oder Zersetzungsreaktion nicht stattfindet und dadurch die Verarbeitbarkeit des Kunststoffs erheblich verbessert wird. Gleichzeitig bleibt die flammwidrige Wirkung erhalten.

Die Verbindungen der Komponente D besitzen eine mit Ammoniumpolyphosphat vergleichbare oder höhere Zersetzungstemperatur und unterstützen daher die Wirksamkeit des Ammoniumpolyphosphats oder seiner Derivate. Beim Einsatz in einem Kunststoff bleiben dessen Stabilität, Verarbeitbarkeit und mechanische Belastbarkeit erhalten.

Die genannten Bestandteile des erfindungsgemäßen Flammschutzmittels tragen in der erfindungsgemäßen Zusammensetzung auch zur Verbesserung der mechanischen Eigenschaften eines Polymers bei, in welchem das Flammschutzmittel eingesetzt wird.

Ein weiterer Vorteil des erfindungsgemäßen Flammschutzmittels ist, daß es im Vergleich zu herkömmlichen Flammschutzmitteln bei gleich guter oder besserer Wirkung in geringeren Mengen eingesetzt werden kann und dadurch auch die Kosten eines derart ausgerüsteten Kunststoffs reduziert und dessen mechanische Eigenschaften weniger stark beeinflußt bzw. beeinträchtigt werden. Die erfindungsgemäßen Flammschutzmittel erzielen auch in einer Konzentration von weniger als 30% in einem dünnschichtigen Kunststoff eine sehr gute Flammschutzwirkung.

Die Komponente A umfasst beschichtete(s) Ammoniumpolyphosphat(e) und/oder Derivate davon. Die Beschichtung der Komponente A bewirkt nicht nur eine starke Reduzierung der Wasserlöslichkeit, sondern auch eine erhöhte Temperaturstabilität des Ammoniumpolyphosphats, eine reduziertere Aktivität des Ammoniumpolyphosphats mit anderen Komponenten des Flammschutzmittels sowie eine erhöhte Kompatibilität mit dem Polymer, in welchem das Flammschutzmittel eingesetzt wird.

Die Komponente A umfasst beschichtetes Ammoniumpolyphosphat der Kristallform II, welche im Vergleich zu den anderen Kristallformen nahezu unlöslich in Wasser ist. Es handelt sich dabei um eine pulverförmige Substanz, die bereits ohne Beschichtung eine gute flammwidrige Wirkung bei gleichzeitig geringer Wasserlöslichkeit aufweist. Der Vorteil der Verwendung von beschichtetem Ammoniumpolyphosphat der Kristallform II besteht darin, daß dieses eine höhere thermische Stabilität und höhere Kompatibilität mit Polymeren aufweist, so daß dadurch eine verbesserte Dispergierung des Flammschutzmittels in dem Polymer, ein verbessertes Verarbeitungsprofil des Polymers und ein effizienterer Brandschutz erzielt wird.

Erfindungsgemäß ist/sind das Ammoniumpolyphosphat und/oder die Derivate davon mit Melamin, Melaminharz, Melaminderivaten, Silanen, Siloxanen oder Polystyrolen beschichtet. Es bildet sich eine ionische Bindung zwischen dem partikelförmigen Ammoniumpolyphosphat und/oder Derivat davon und dem Beschichtungsmaterial, wobei an das Ammoniumpolyphosphat gebundener Ammoniak durch das Beschichtungsmaterial ersetzt wird. Diese Verbindung ist sehr stabil, so daß bei der Verarbeitung des Kunststoffs die Beschichtung weitgehend beständig ist.

Die Herstellung von mit Melamin beschichtetem Ammoniumpolyphosphat erfolgt bei Temperaturen von mehr als 250 °C. Dabei wird die Reaktionszeit so bemessen, daß eventuell überschüssiges Melamin vollständig mit der Oberfläche des Ammoniumpolyphosphates abreagiert, dabei Ammoniak ersetzt und besser gebunden wird.

Weiterhin bevorzugt ist eine Beschichtung der Ammoniumpolyphosphatpartikel mit Melamin, Melaminharz, Melminderivaten, Silanen, Siloxanen oder Polystoyrolen und anschließende Vernetzung. Die Vernetzung der Melaminbeschichtung bewirkt eine weitere Reduzierung der Wasserlöslichkeit des Ammoniumpolyphosphats und wird in der Regel mit Formaldehyd durchgeführt. Das Verfahren ist dem Fachmann bekannt.

Bevorzugt beträgt der Anteil der Beschichtung der Ammoniumpolyphosphate und/oder der Derivate davon 0,1 bis 20 Gew.-%, bevorzugt 1 bis 10 Gew.-%, bezogen auf das Gesamtgewicht der beschichteten Ammoniumpolyphosphate und/oder der Derivate davon. Bei einem derartigen Verhältnis von Ammoniumpolyphosphat zu Beschichtung ist ein optimaler Schutz des Ammoniumpolyphosphats gewährleistet, der auch zu einer optimalen Verbindbarkeit des Ammoniumpolyphosphats mit einem Polymer, in welchem das Flammschutzmittel eingesetzt werden soll, führt. Gleichzeitig ist bei diesem Verhältnis die Beschichtung nicht in einem solchen Überschuß vorhanden, daß ein Ablösen von freiem Beschichtungsmaterial, das weniger stark an Ammoniumpolyphosphat gebunden ist, auftritt.

Besonders bevorzugt beträgt die mittlere Teilchengröße D50 der beschichteten Partikel aus Ammoniumpolyphosphat oder einem Derivat davon von 5 µm bis 30 µm, insbesondere von 5 µm bis 20 µm, besonders bevorzugt zwischen 7 µm und 18 µm, einschließlich der Beschichtung. Größere Teilchen ließen sich nicht ausreichend homogen in einem Polymer dispergieren und würden dadurch dessen Eigenschaften unter Umständen negativ beeinflussen. Kleinere Teilchen sind ebenfalls weniger bevorzugt, da sie nur schlecht dosierbar sind.

Bei dem beschichteten Ammoniumpolyphosphat und/oder Derivat davon beträgt die mittlere Teilchengröße D50 der Partikel aus Ammoniumpolyphosphat und/oder der Derivate davon als Kern der beschichteten Partikel vorzugsweise etwa 7 µm. Dadurch wird insbesondere auch erreicht, daß die erfindungsgemäßen Flammschutzmittel im Vergleich zu bisher bekannten Flammschutzmitteln hohe Zersetzungstemperaturen und damit eine sehr hohe Temperaturstabilität aufweisen.

Vorzugsweise wird als Komponente B ein oligomeres oder polymeres 1,3,5-Triazinderivat eingesetzt, bei dem n eine ganze Zahl von größer als 2 bis 50, besonders bevorzugt von größer als 2 bis 30, und insbesondere bevorzugt von 3 bis 9 ist. Bei der Herstellung derartiger Oligomere oder Polymere entstehen üblicherweise Mischungen mit unterschiedlichen Kettenlängen. Auch solche bei der Polymerisation entstehenden Mischungen können eingesetzt werden, wobei mehr als 70%, vorzugsweise mehr als 80%, und besonders bevorzugt mehr als 90% der eingesetzten Oligomere und Polymere eine Kettenlänge von n = 3 bis 50, vorzugsweise von n = 3 bis 30 und besonders bevorzugt von n = 3 bis 9 aufweisen. Es können dabei sowohl Heteropolymere als auch Homopolymere eingesetzt werden.

Bevorzugte Monomere des 1,3,5-Triazinderivats gemäß Komponente B sind 2-Piperazinylen-4-morpholino-1,3,5-Triazin und 2-Piperazinylen-4-piperidino-1,3,5-Triazin. Es können auch gemischte Oligomere oder Polymere der oben genannten Substanzen eingesetzt werden. Der synergistische Effekt der genannten Polymere oder Oligomere mit beschichtetem Ammoniumpolyphosphat und/oder Derivaten davon bewirkt insbesondere eine Steigerung der Effizienz des Flammschutzmittels.

Bevorzugte Verbindungen gemäß Komponente C, die die Wirksamkeit des Flammschutzmittels weiter verbessern und insbesondere eine geringe Zugabemenge des Flammschutzmittels ermöglichen, sind Metallsalze, insbesondere Monozinkphosphat Zn(H₂PO₄)₂, Zinkborat, Trizinkphosphat Zn₃(PO₄)₂, Zinkpyrophosphat Zn₂P₂O₇, Zinkpolyphosphat der allgemeinen Formel oZnO pP₂O₃ qH₂O, wobei o und p von 1 bis 7 betragen und q von 0 bis 7 beträgt, Zinkhydroxystannat ZnSn(OH)₆, Zinkstannat ZnSnO₃, Borphosphat BPO₄, Monoaluminiumphosphat Al(H₂PO₄)₃, Trialuminiumphosphat AlPO₄, Aluminiummetaphosphat [Al(PO₃)₃]ₙ, Ammoniumoctamolybdat (AOM) und Gemische davon. Insbesondere bei diesen Salzen hat sich überraschenderweise gezeigt, daß durch die Wechselwirkung mit den Komponenten A und B eine hervorragende Wirkung des Flammschutzmittels erzielt wird, die auch bei einer geringen Zugabemenge in Polymeren zu einer Klassifizierung in der höchsten Brandschutzklasse führt.

Unter den vorkondensierten Melaminderivaten, Melaminsalzen und Melaminaddukten der Komponente D sind Melem, Melon, Melam bevorzugt. Weitere bevorzugte Verbindungen der Komponente D sind Melamincyanurat, Melaminborat, Melaminorthophosphat, Melaminpyrophosphat, Dimelaminpyrophosphat und Melaminpolyphosphat. Der Zusatz dieser Substanzen bewirkt eine weitere Verbesserung des Flammschutzmittels, wobei diese Substanzen auch in geringen Mengen als Treibmittel wirken.

Das erfindungsgemäße Polymermaterial ist ein thermoplastisches Elastomer, welches das erfindungsgemäße Flammschutzmittel vorzugsweise in einer Menge von 5 bis 60 Gew.-%, besonders bevorzugt in einer Menge 10 bis 40 Gew.-% enthält. Derart flammgeschützte Polymere erfüllen auch bei geringen Schichtdicken von z. B. nur 0,8 mm höchste Brandschutzanforderungen selbst bei hoch entflammbaren Kunststoffen. Dabei werden durch das erfindungsgemäße Flammschutzmittel gegenüber bekannten mit Flammschutzmitteln ausgerüsteten Kunststoffen die Flexibilität und Verarbeitbarkeit der flammwidrig ausgerüsteten Kunststoffe verbessert.

Bevorzugte Polymermaterialien, nämlich thermoplastische Elastomere, sind ausgewählt unter gefüllten und ungefüllten thermoplastischen Elastomeren auf Olefinbasis (TPO), vernetzten thermoplastischen Elastomeren auf Olefinbasis, Urethanen (TPU), Polyestern und Copolyestern (TPC), Styrol-Blockcopolymeren (TPS), Polyamiden und Copolyamiden (TPA). Insbesondere werden bei Verwendung des erfindungsgemäßen Flammschutzmittels mit thermoplastischen Elastomeren auf Olefinbasis, vernetzten thermoplastischen Elastomeren auf Olefinbasis und Styrol-Blockcopolymeren die mechanischen Eigenschaften der Kunststoffe, insbesondere die Abriebfestigkeit in günstiger Art und Weise beeinflußt. Daher können derartige flammwidrig ausgerüstete thermoplastische Elastomere insbesondere als Ersatz von PVC in Kabeln, Leitungssystemen, Röhren für elektrische Kabel und Rohrleitungen von Abwassersystemen eingesetzt werden. Besonders bevorzugt ist das erfindungsgemäße thermoplastische Elastomer unter Styrol-Blockcopolymeren (TPS), vorzugsweise unter den Styrol-Blockcopolymeren SBS (Styrol-Butadien-Styrol), SEBS (Styrol-Ethenbuten-Styrol), SEPS (Styrol-Ethenpropen-Styrol), SEEPS (Styrol-Ethen-Ethenpropen -Styrol)und MBS (Methacrylat-Butadien-Styrol) ausgewählt.

Thermoplastische Elastomere, insbesondere Styrol-Blockcopolymere, sind verhältnismäßig leicht entflammbar, in der Regel leichter als viele andere Polymerarten, unter anderem weil sie einen hohen Anteil an Ölen enthalten, die die Entflammbarkeit verstärken. Es war daher besonders überraschend, dass thermoplastische Elastomere überhaupt und insbesondere mit den erfindungsgemäßen Flammschutzmitteln derart effektiv flammgeschützt werden konnten, wie dies erfindungsgemäß erreicht wird. Der zum Erreichen einer guten Flammschutzwirkung notwendige Anteil an Flammschutzmittel in der Polymermatrix ist zwar in der Regel etwas höher als bei einigen anderen Polymerarten, jedoch beeinflußt dieser höhere Anteil an Flammschutzmitteln bei sehr vielen Arten thermoplastischer Elastomere die mechanischen und sonstigen Eigenschaften nicht wesentlich zum Nachteil.

Weiterhin bevorzugt enthält das Polymermaterial neben dem erfindungsgemäßen Flammschutzmittel weitere Füllstoffe, die unter Calciumcarbonat, Silicaten, wie Talk, Ton oder Glimmer, Kieselerde, Calcium- und Bariumsulfat, Aluminiumhydroxid, Glasfasern und Glaskugeln sowie Holzmehl, Cellulosepulver und Rußen und Graphiten ausgewählt sind. Diese Füllstoffe können weitere gewünschte Eigenschaften der Kunststoffe bewirken. Insbesondere kann dadurch der Preis des Kunststoffs herabgesetzt werden, der Kunststoff gefärbt werden oder gewünschte mechanische Eigenschaften des Kunststoffs verbessert werden, z.B. durch eine Verstärkung mit Glasfasern.

In einer weiteren Ausführungsform des erfindungsgemäßen Polymermaterials weist in dem halogenfreien Flammschutzmittel die Komponente B einen Chlorgehalt von < 1 Gew.-%, vorzugsweise < 0,8 Gew.-% auf. Dies ist besonders vorteilhaft gegenüber dem Stand der Technik, da bei bekannten Flammschutzmitteln unerwünscht viel Chlor in Form von anorganisch und organisch gebundenem Chlor eingebracht wird.

In einer weiteren Ausführungsform der Erfindung wiest das Polymermaterial insgesamt einen Chlorgehalt von < 1500 Gew.-ppm, vorzugsweise < 900 Gew.-ppm auf. Dies ist besonders vorteilhaft gegenüber dem Stand der Technik, da bei bekannten Flammschutzmitteln unerwünscht viel Chlor in Form von anorganisch und organisch gebundenem Chlor eingebracht wurde. Der begriff "halogenfrei" im Sinne der Erfindung erlaubt geringe Verunreinigungen an Chlor in den vorgenannten Höchstmengen. Chlor bzw. Halogen allgemein soll aber generell gering gehalten werden, um die Nachteiligen Auswirkungen der Halogene zu vermeiden.

In einer weiteren Ausführungsform des erfindungsgemäßen Polymermaterials sind in dem halogenfreien Flammschutzmittel Dispergierhilfsmittel in einer Menge von 0,01 bis 10 Gew.-%, vorzugsweise in einer Menge von 0,1 bis 5, 0 Gew.-% enthalten sind, wobei die Dispergierhilfsmittel vorzugsweise unter Fettsäureamiden, einschließlich Fettsäuremonoamiden, Fettsäurebisamiden und Fettsäurealkanolamiden, wie Oleamiden und Erucamiden, unter Fettsäureestern, einschließlich Glycerolestern und Waxestern, unter C16- bis C18-Fettsäuren, unter Fettsäurealkoholen, einschließlich Cetyl- und Stearyl-Fettsäurealkoholen, unter natürlichen und synthetischen Waxen, Polyethylenwaxen und oxidierten Polyethylenwaxen und unter Metallstearaten, vorzugsweise Ca-, Zn-, Mg-, Ba-, Al-, Cd- und Pb-Stearaten, ausgewählt sind. Die Zugabe der vorgenannten Dispergierhilfsmittel verbessert die Dosierbarbarkeit des Flammschutzmittels, die Extrudierbarkeit des Polymermaterial und die Homogenität des dispergierten Flammschutzmittels innerhalb der Polymermatrix.

In einer weiteren Ausführungsform des erfindungsgemäßen Polymermaterials weist das halogenfreie Flammschutzmittel einen Gehalt an freiem Wasser (Feuchtegehalt) von < 0,6 Gew.-%, vorzugsweise < 0,4 Gew.-% auf. Ein niedriger Wassergehalt verbessert ebenfalls die Dosierbarbarkeit des Flammschutzmittels, die Extrudierbarkeit des Polymermaterial und die Homogenität des dispergierten Flammschutzmittels innerhalb der Polymermatrix.

### Beispiele

Im folgenden werden einige Beispiele angeführt, die sowohl erfindungsgemäße als auch nicht erfindungsgemäße Polymere bzw. die darin eingesetzten Flammschutzmittel umfassen.

Für die Beispiele wurden Prüfkörper für verschiedene Untersuchungen in einem Brabender Kunststoffkneter hergestellt. Dazu wurde zunächst ein Polymer ohne Flammschutzmittelzusatz unter Bewegung aufgeschmolzen. Anschließend wurden die Komponenten A und B sowie C und/oder D in einem Schritt als Mischung oder nacheinander der Schmelze zugegeben. Nach einer Homogenisierungsphase von 10 bis 15 Minuten wurde das Kunststoffmaterial entnommen und mit Hilfe einer beheizbaren Presse zu Platten mit Dicken von 0,8 mm und 1,6 mm gepreßt. Die gepreßten Platten wurden mit Hilfe einer Säge zu geeigneten Prüfkörpern zurechtgeschnitten und den nachfolgend beschriebenen Tests unterzogen.

Die Zusammensetzungen der unterschiedlichen Prüfkörper bzw. Vergleichsprüfkörper sind unten tabellarisch angegeben. Das verwendete Triazinderivat ist ein Polymeres von 2-Piperazinylen-4-morpholino-1,3,5-Triazin. Weiterhin wurde ein unbeschichtetes Ammoniumpolyphosphat (FR CROS 484), ein mit Melamin beschichtetes Ammoniumpolyphosphat (FR CROS C40) oder ein mit Melamin beschichtetes und vernetztes Ammoniumpolyphosphat (FR CROS 498) eingesetzt (Hersteller jeweils Chemische Fabrik Budenheim). Als Melaminpolyphosphat wurden Budit 3141 (Hersteller: Budenheim Iberica) oder Melapur 200 (Hersteller Cl-BA) eingesetzt. Das verwendete Aluminiumphosphat ist Fabutit (Hersteller: Chemische Fabrik Budenheim), das Melamincyanurat ist als Budit 315 von Budenheim Iberica erhältlich.

Die nur durch eine Zahl und ohne V bezeichneten Beispiele sind erfindungsgemäße Beispiele. Die mit V und einer Zahl gekennzeichneten Beispiele sind nicht erfindungsgemäße Vergleichsbeispiele.

### UL94 Vertikal Test

Zur Durchführung des UL94 Vertikal Test, im nachfolgenden mit UL94 V bezeichnet, wurde je ein Set aus fünf Prüfkörpern mit einer Dicke von 1,6 mm bzw. 0,8 mm an einem Ende in einer vertikalen Position eingespannt. An das freie Ende des Prüfkörpers wurde zweimal für 10 s eine Bunsenbrennerflamme gehalten. Danach wurde jeweils die Zeit bis zum Erlöschen der Flamme oder des Glühens des Prüfkörpers gemessen. Gleichzeitig wurde festgestellt, ob entflammte Tropfen des Prüfkörpers darunterliegende Baumwolle entzünden konnten.

"TBT" bezeichnet jeweils die Summe der Brenndauern von insgesamt 5 Prüfkörpern in Sekunden.

Die Untersuchungen wurden gemäß den Vorgaben der Underwriter Laboratories, Standard UL 94V durchgeführt. "UL94" bezeichnet die Brandschutzeinstufung des Prüfkörpers, wobei V0 bedeutet, daß die Gesamtbrenndauer von 5 getesteten Prüfkörpern weniger als 50 Sekunden betrug und Baumwolle nicht durch herabtropfende glühende oder brennende Bestandteile des Prüfkörpers entzündet wurde. Die Einstufung V2 bedeutet, daß die Gesamtbrenndauer von 5 getesteten Prüfkörpern insgesamt weniger als 250 Sekunden betrug, ein Baumwolltuch jedoch durch herabtropfende Prüfkörperbestandteile entzündet wurde.

### LOI Test

Die kleinste Sauerstoffkonzentration in einer N₂/O₂ -Mischung, bei der eine Probe nach dem Anzünden gerade noch von allein weiter brennt, ist der LOI-Wert (Limiting Oxygen Index). Je höher der LOI-Wert, desto flammbeständiger ist die Probe. Dabei sind LOI-Werte über 30% sehr gut. Ein hoher LOI ist besonders wichtig bei der Einhaltung von Normen, die in der Kabelindustrie gefordert werden.

Die Untersuchung wurde gemäß DIN EN ISO 4589 Teil 2 durchgeführt. Die Prüfkörper hatten die Maße 1,25 mm x 3,0 x 6,5 mm.

Die Ergebnisse der Untersuchungen sind unten tabellarisch wiedergegeben. Der LOI ist in Prozent angegeben ist.

### Untersuchung der Zersetzungstemperatur des Flammschutzmittels

Als weiterer Test wurden verschiedene Flammschutzmittelzusammensetzungen selbst ohne Einarbeitung in ein Polymer erhitzt und dabei festgestellt, ab welcher Temperatur eine Zersetzung stattfindet. Üblicherweise wird die Zersetzungstemperatur als die Temperatur angegeben, bei der ein Gewichtsverlust von 2% eintritt.

Diese Untersuchungen wurden mit Hilfe der Thermogravimetrie durchgeführt. Dafür wurde jeweils eine Menge von 10 mg eines Flammschutzmittels in einen Tiegel gefüllt und bei einer Temperatursteigerung von 10 Kelvin/min auf Temperaturen über 350 °C erhitzt. Während des Erhitzens wurde die Gewichtsveränderung der Probe gemessen.

Die Ergebnisse dieser Untersuchungen sind unten tabellarisch wiedergegeben.

Insbesondere bei Prüfkörpern mit Schichtdicken von 0,8 mm wird deutlich, daß die erfindungsgemäßen Flammschutzmittel enthaltenden Polymere eine deutliche Verbesserung gegenüber den Vergleichsbeispielen mit ähnlichen bisher verwendeten Flammschutzmitteln erzielen. Erfindungsgemäße Polymermaterialien erreichen fast alle die höchste Brandklasse im UL94-Test von V0 bei einer Schichtdicke von 0,8 mm, während dies bei den Vergleichsbeispielen nicht der Fall ist.

Insbesondere das Erreichen der höchsten Brandschutzklasse bei sehr geringen Schichtdicken und einem geringen Anteil des Flammschutzmittels und einer guten Brandschutzklassifizierung, eröffnet die Möglichkeit, thermoplastische Elastomere mit sehr geringen Schichtdicken flammfest auszurüsten und dadurch neue Anwendungsmöglichkeiten von halogenfreien intumeszierenden Flammschutzmitteln zu eröffnen. Dazu gehören Verkleidungen von Kabeln, Kabelkanäle, Folien, elektronische Bauteile, Gehäuse von elektrischen und elektronischen Geräten, etc. Bei der Herstellung solcher Materialien ist es weiterhin vorteilhaft, daß die erfindungsgemäßen Flammschutzmittel eine ausgezeichnete Wirkung bei den verwendeten Thermoplasten erzielen und dadurch die mechanischen Eigenschaften der so ausgerüsteten Polymere erhalten bleiben. Die erfindungsgemäßen Flammschutzmittel zeichnen sich auch durch eine sehr geringe Rauchgasentwicklung aus.

Alle erfindungsgemäßen Flammschutzmittel bzw. mit erfindungsgemäßen Flammschutzmitteln ausgerüstete Polymere und daher erfindungsgemäße Polymere haben sowohl eine kurze Brenndauer, als auch einen sehr hohen Sauerstoffindex und eine sehr hohe Zersetzungstemperatur. Überdies sind die Polymere verarbeitbar, so daß ein Ersatz von umweltbelastendem PVC durch erfindungsgemäße Polymere möglich ist.

**Tabelle 1: Zusammensetzungen**

| **Beispiel Nr.** | | **1** | **2** | **3*** | **4** | **5** | **6** | **7** | **8** | **9** | **10** | **11** | | **V1** | **V2** | **V3** | **V4** | **V5** | **V6** |
|---|---|---|---|---|---|---|---|---|---|---|---|---|---|---|---|---|---|---|---|
| **Komponente** | | | | | | | | | | | | | | | | | | | |
| **A** | FR CROS 489 | 34 | | | 34 | 34 | 34 | 34 | 34 | 34 | 34 | 34 | | | 34 | | | | |
| **A** | FR CROS C 40 | | 34 | | | | | | | | | | | 20 | | | | | |
| **A** | FR CROS 484 | | | 34 | | | | | | | | | | | | | | | |
| **B** | Triazinverbindung | 8 | 8 | 8 | 8 | 8 | 8 | 8 | 8 | 8 | 8 | 8 | | 5 | | | | | |
| **X** | Pentaerytritol (Vergleich) | | | | | | | | | | | | | | 8 | | | | |
| **C** | Zinkpyrophosphat | | | | | | | | | 1,5 | | | | | | | | | |
| **C** | Zinkborat | | | | | | | | | | 1,5 | | | | | | | | |
| **C** | Aluminiumphosphat | | | | | | | | | | | 1,5 | | | | | | | |
| **D** | Melamincyanurat | 3 | 3 | 3 | 3 | 3 | | | | 1,5 | 1,5 | 1,5 | | | 3 | | | | |
| **D** | Melem | | | | | | 3 | | | | | | | | | | | | |
| **D** | Melon | | | | | | | 3 | | | | | | | | | | | |
| **D** | Melaminpolyphosphat | | | | | | | | 3 | | | | | | | | | | |
| **Zusatz** | Magnesiumhydroxid | | | | | | | | | | | | | | | 45 | 55 | 45 | 45 |
| **Kunststoff** | TPS | 55 | 55 | 55 | | | 55 | 55 | 55 | 55 | 55 | 55 | | | 55 | 55 | 45 | | |
| **Kunststoff** | TPA | | | | 55 | | | | | | | | | | | | | 55 | |
| **Kunststoff** | TPO | | | | | 55 | | | | | | | | | | | | | 55 |
| **Kunststoff** | PP | | | | | | | | | | | | | 75 | | | | | |
| **Kunststoff** | HDPE | | | | | | | | | | | | | | | | | | |

| | | | | | | | | | | | | | | | | | | | |
|---|---|---|---|---|---|---|---|---|---|---|---|---|---|---|---|---|---|---|---|
| TPS: SEBS = Styrol-Ethylen-Butylen-Styrol TPA: Polyether-Polyamid-Blockcolymer TPO: Thermoplastisches Polyolefin mit unvernetzter Elastomerphase PP: Polypropylen HDPE: High-Density-Polyethylen * Vergleichsbeispiel | | | | | | | | | | | | | | | | | | | |

**Tabelle 2: Ergebnisse von Flammschutztests**

| **Beispiel Nr.** | | **1** | **2** | **3*** | **4** | **5** | **6** | **7** | **8** | **9** | **10** | **11** | | **V1** | **V2** | **V3** | **V4** | **V5** | **V6** |
|---|---|---|---|---|---|---|---|---|---|---|---|---|---|---|---|---|---|---|---|
| **Test** | **Schichtdicke** | | | | | | | | | | | | | | | | | | |
| **TBT** | 1,6 mm | 15 | 11 | 22 | 16 | 19 | 16 | 17 | 16 | 14 | 13 | 13 | | 25 | >50 | >50 | >50 | >50 | >50 |
| **UL 94** | 1,6 mm | V0 | V0 | V0 | V0 | V0 | V0 | V0 | V0 | V0 | V0 | V0 | | V0 | V2 | V2 | V1 | V2 | V2 |
| **TBT** | 0,8 mm | 25 | 22 | >50 | >50 | 30 | 28 | 30 | 29 | 26 | 25 | 26 | | >50 | >50 | >50 | >50 | >50 | >50 |
| **UL 94** | 0,8mm | V0 | V0 | V2 | V2 | V0 | V0 | V0 | V0 | V0 | V0 | V0 | | V2 | n.c. | n.c. | n.c. | n.c. | n.c. |
| **LOI** | 1,25 mm | 31 | 32 | 28 | 29 | 31 | 30 | 31 | 31 | 34 | 33 | 33 | | 32 | 21 | 25 | 27 | 25 | 27 |

| | | | | | | | | | | | | | | | | | | | |
|---|---|---|---|---|---|---|---|---|---|---|---|---|---|---|---|---|---|---|---|
| n.c.: nicht klassifizierbar (schlechter als V2) | | | | | | | | | | | | | | | | | | | |

**Tabelle 3: Gewichtsverlust des Flammschutzmittels (ohne Kunststoff) von 2%**

| **Beispiel Nr.** | **1** | **2** | **3*** | **4** | **5** | **6** | **7** | **8** | **9** | **10** | **11** | | **V1** | **V2** | **V3** | **V4** | **V5** | **V6** |
|---|---|---|---|---|---|---|---|---|---|---|---|---|---|---|---|---|---|---|
| **Temperatur in °C** | 312 | 319 | 313 | n.t. | n.t. | n.t. | n.t. | n.t. | n.t. | n.t. | n.t. | | 319 | 280 | 315 | n.t. | n.t. | n.t. |

| | | | | | | | | | | | | | | | | | | |
|---|---|---|---|---|---|---|---|---|---|---|---|---|---|---|---|---|---|---|
| n.t.: nicht getestet * Vergleichsbeispiel | | | | | | | | | | | | | | | | | | |

## Patentansprüche

1. Polymermaterial, welches ein halogenfreies Flammschutzmittel eingebettet in die Polymermatrix aufweist, wobei das Flammschutzmittel wenigstens die folgenden Komponenten A und B enthält:
A: Ammoniumpolyphosphat(e) der Kristallform II und/oder Derivate davon, die mit Melamin, Melaminharz, Melaminderivaten, Silanen, Siloxanen oder Polystyrolen beschichtete Partikel und/oder mit Melamin, Melaminharz, Melaminderivaten, Silanen, Siloxanen oder Polystyrolen beschichtete und vernetzte Partikel sind,
B: oligomeres oder polymeres 1,3,5-Triazinderivat oder Gemische von mehreren davon der allgemeinen Formel 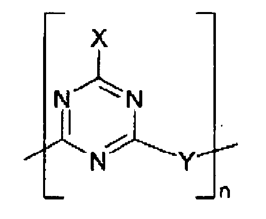 wobei
X ein Morpholino-Rest, ein Piperidino-Rest oder eine von Piperazin abgeleitete Gruppe ist,
Y eine zweiwertige, von Piperazin abgeleitete Gruppe ist und
n eine ganze Zahl größer als 2 ist,
und wenigstens eine unter den folgenden Komponenten C und D ausgewählte Verbindung enthält:
C: Phosphate, Pyrophosphate, Polyphosphate, organische und anorganische Phosphonate, organische und anorganische Phosphinate, Stannate, Molybdate oder Borate der Elemente der Hauptgruppen II, III, IV oder der Nebengruppenelemente Fe, Zn, Ti, Mn, Zr, Mo,
D: vorkondensierte Melaminderivate, Melaminsalze und -addukte, Ethylendiaminphosphat, Piperazinphosphat, Piperazinpolyphosphat, 1,3,5-Trihydroxyethylisocyanurat, 1,3,5-Triglycidylisocyanurat, Triallylisocyanurat,
wobei das Gewichtsverhältnis der Komponente A zu der Komponente B von 10:1 bis 1:1 beträgt und die Komponenten A und B zusammen 60 bis 99 Gew.-% und die Komponenten C und D zusammen 1 bis 40 Gew.-% des Gesamtgewichts der Komponenten A, B, C und D ausmachen,
wobei das Polymermaterial ein thermoplastisches Elastomer (TPE) ist.

2. Polymermaterial nach Anspruch 1, **dadurch gekennzeichnet, dass** es das halogenfreie Flammschutzmittel in einer Menge von 5 bis 60 Gew.-%, vorzugsweise in einer Menge von 10 bis 40 Gew.-% enthält.

3. Polymermaterial nach einem der vorangegangenen Ansprüche, **dadurch gekennzeichnet, daß** das thermoplastische Elastomer (TPE) unter thermoplastischen Elastomeren auf Olefinbasis (TPO), vernetzten thermoplastischen Elastomeren auf Olefinbasis, Urethanen (TPU), Polyestern und Copolyestern (TPC), Styrol-Blockcopolymeren (TPS), Polyamiden und Copolyamiden (TPA) ausgewählt ist.

4. Polymermaterial nach einem der vorangegangenen Ansprüche, **dadurch gekennzeichnet, daß** das thermoplastische Elastomer unter Styrol-Blockcopolymeren (TPS), vorzugsweise unter den Styrol-Blockcopolymeren SBS (Styrol-Butadien-Styrol), SEBS (Styrol-Ethenbuten-Styrol), SEPS (Styrol-Ethenpropen-Styrol), SEEPS (Styrol-Ethen-Ethenpropen-Styrol) und MBS (Methacrylat-Butadien-Styrol) ausgewählt ist.

5. Polymermaterial nach einem der vorangegangenen Ansprüche, **dadurch gekennzeichnet, daß** das Polymermaterial Füllstoffe enthält, die vorzugsweise unter Calciumcarbonat, Silicat, Talk, Ton, Glimmer, Kieselerde, Calciumsulfat, Bariumsulfat, Aluminiumhydroxid, Glasfasern und -kugeln, Holzmehl, Cellulose-Pulver, Ruß und Graphit ausgewählt sind.

6. Polymermaterial nach einem der vorangegangenen Ansprüche, **dadurch gekennzeichnet, daß** in dem halogenfreien Flammschutzmittel der Anteil der Beschichtung der Ammoniumpolyphosphate und/oder Derivate davon gemäß Komponente A 0,1 bis 20 Gew.-%, bevorzugt 1 bis 10 Gew.-%, bezogen auf das Gesamtgewicht der beschichteten Ammoniumpolyphosphate und/oder Derivate davon, beträgt.

7. Polymermaterial nach einem der vorangegangenen Ansprüche, **dadurch gekennzeichnet, daß** in dem halogenfreien Flammschutzmittel die beschichteten Ammoniumpolyphosphate und/oder Derivate davon gemäß Komponente A einschließlich Beschichtung eine mittlere Teilchengröße D50 von 5 bis 30 µm, vorzugsweise 5 bis 20 µm aufweisen.

8. Polymermaterial nach einem der vorangegangenen Ansprüche, **dadurch gekennzeichnet, daß** in dem halogenfreien Flammschutzmittel das 1,3,5-Triazinderivat gemäß Komponente B unter Oligomeren und Polymeren von 2-Piperazinylen-4-morpholino-1,3,5-triazin und 2-Piperazinylen-4-piperidino-1,3,5-triazin und Kombinationen der vorgenannten Verbindungen ausgewählt ist.

9. Polymermaterial nach einem der vorangegangenen Ansprüche, **dadurch gekennzeichnet, daß** in dem halogenfreien Flammschutzmittel die Komponente C unter Monozinkphosphat, Zinkborat, Trizinkphosphat, Zinkpyrophosphat, Zinkpolyphosphat, Zinkhydroxystannat, Zinkstannat, Borphosphat, Monoaluminiumphosphat, Trialuminiumphosphat, Aluminiummetaphosphat und Gemischen davon ausgewählt ist.

10. Polymermaterial nach einem der vorangegangenen Ansprüche, **dadurch gekennzeichnet, daß** in dem halogenfreien Flammschutzmittel die Komponente D unter Melem, Melon, Melam, Melamincyanurat, Melaminborat, Melaminorthophosphat, Melaminpyrophosphat, Dimelaminpyrophosphat und Melaminpolyphosphat ausgewählt ist.

11. Polymermaterial nach einem der vorangegangenen Ansprüche, **dadurch gekennzeichnet, daß** in dem halogenfreien Flammschutzmittel die Komponente B einen Chlorgehalt von < 1 Gew.-%, vorzugsweise < 0,8 Gew.-% aufweist und/oder das gesamte Polymermaterial einen Chlorgehalt von < 1500 Gew.-ppm, vorzugsweise < 900 Gew.-ppm aufweist.

12. Polymermaterial nach einem der vorangegangenen Ansprüche, **dadurch gekennzeichnet, daß** in dem halogenfreien Flammschutzmittel Dispergierhilfsmittel in einer Menge von 0,01 bis 10 Gew.-%, vorzugsweise in einer Menge von 0,1 bis 5, 0 Gew.-% enthalten sind, wobei die Dispergierhilfsmittel vorzugsweise unter.Fettsäureamiden, einschließlich Fettsäuremonoamiden, Fettsäurebisamiden und Fettsäurealkanolamiden, wie Oleamiden und Erucamiden, unter Fettsäureestern, einschließlich Glycerolestern und Waxestern, unter C16- bis C18-Fettsäuren, unter Fettsäurealkoholen, einschließlich Cetyl- und Stearyl-Fettsäurealkoholen, unter natürlichen und synthetischen Waxen, Polyethylenwaxen und oxidierten Polyethylenwaxen und unter Metallstearaten, vorzugsweise Ca-, Zn-, Mg-, Ba-, Al-, Cd- und Pb-Stearaten, ausgewählt sind.

13. Polymermaterial nach einem der vorangegangenen Ansprüche, **dadurch gekennzeichnet, daß** das halogenfreie Flammschutzmittel einen Gehalt an freiem Wasser (Feuchtegehalt) von < 0,6 Gew.-%, vorzugsweise < 0,4 Gew.-% aufweist.

## Claims

1. Polymeric material which has a halogen-free flame retardant incorporated into the polymer matrix, wherein the flame retardant contains at least the following components A and B:
A: ammonium polyphosphate(s) of the crystal form II and/or derivatives thereof, which are particles coated with melamine, melamine resin, melamine derivatives, silanes, siloxanes or polystyrenes and/or particles coated with melamine, melamine resin, melamine derivatives, silanes, siloxanes or polystyrenes,
B: an oligomeric or polymeric 1,3,5-triazine derivative or mixtures of several thereof of the general formula 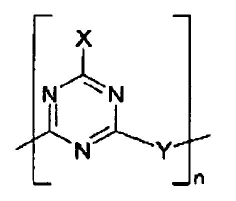 wherein
X is a morpholino residue, a piperidino residue or a group derived from piperazine,
Y is a divalent group derived from piperazine and
n is a whole number greater than 2,
and at least one compound selected from the following components C and D:
C: phosphates, pyrophosphates, polyphosphates, organic and inorganic phosphonates, organic and inorganic phosphinates, stannates, molybdates or borates of the elements of the main groups II, III or IV or the transition group elements Fe, Zn, Ti, Mn, Zr and Mo,
D: precondensed melamine derivatives, melamine salts and adducts, ethylenediamine phosphate, piperazine phosphate, piperazine polyphosphate, 1,3,5-trihydroxyethyl isocyanurate, 1,3,5-triglycidyl isocyanurate and triallyl isocyanurate,
wherein the weight ratio of the component A to the component B is from 10:1 1 to 1:1 and the components A and B together make up 60 to 99 wt. % and the components C and D together make up 1 to 40 wt. % of the total weight of the components A, B, C and D, and
wherein the polymeric material is a thermoplastic elastomer (TPE).

2. Polymeric material according to Claim 1, **characterised in that** it contains the halogen-free flame retardant in a quantity of 5 to 60 wt. %, preferably in a quantity of 10 to 40 wt. %.

3. Polymeric material according to one of the previous claims, **characterised in that** the thermoplastic elastomer (TPE) is selected from olefin-based thermoplastic elastomers (TPO), crosslinked olefin-based thermoplastic elastomers, urethanes (TPU), polyesters and co-polyesters (TPC), styrene block copolymers (TPS), polyamides and co-polyamides (TPA).

4. Polymeric material according to one the previous claims, **characterised in that** the thermoplastic elastomer is selected from styrene block copolymers (TPS), preferably from the styrene block copolymers SBS (styrene-butadiene-styrene), SEBS (styrene-ethene-butene-styrene), SEPS (styrene-ethene-propene-styrene), SEEPS (styrene-ethene-ethene-propene-styrene) and MBS (methacrylate-butadiene-styrene).

5. Polymeric material according to one of the previous claims, **characterised in that** the polymeric material contains fillers, which are preferably selected from calcium carbonate, silicate, talc, clay, mica, silica, calcium sulphate, barium sulphate, aluminium hydroxide, glass fibres and beads, wood flour, cellulose powder, soot and graphite.

6. Polymeric material according to one of the previous claims, **characterised in that** in the halogen-free flame retardant the proportion of the coating of the ammonium polyphosphates and/or of the derivatives thereof as in component A is 0.1 to 20 wt. %, preferably 1 to 10 wt. %, based on the total weight of the coated ammonium polyphosphates and/or derivatives thereof.

7. Polymeric material according to one of the previous claims, **characterised in that** in the halogen-free flame retardant the coated ammonium polyphosphates and/or derivatives thereof as in component A including coating have an average particle size D50 from 5 to 30 µm, preferably 5 to 20 µm.

8. Polymeric material according one of the previous claims, **characterised in that** in the halogen-free flame retardant the 1,3,5-triazine derivative as in component B is selected from oligomers and polymers of 2-piperazinylene-4-morpholino-1,3,5-triazine and 2-piperazinylene-4-piperidino-1,3,5-triazine and combinations of the aforesaid compounds.

9. Polymeric material according to one of the previous claims, **characterised in that** in the halogen-free flame retardant the component C is selected from monozinc phosphate, zinc borate, trizinc phosphate, zinc pyrophosphate, zinc polyphosphate, zinc hydroxystannate, zinc stannate, boron phosphate, monoaluminium phosphate, trialuminium phosphate, aluminium metaphosphate and mixtures thereof.

10. Polymeric material according to one of the previous claims, **characterised in that** in the halogen-free flame retardant the component D is selected from melem, melon, melam, melamine cyanurate, melamine borate, melamine orthophosphate, melamine pyrophosphate, dimelamine pyrophosphate and melamine polyphosphate.

11. Polymeric material according to one of the previous claims, **characterised in that** in the halogen-free flame retardant the component B has a chlorine content of < 1 wt. %, preferably < 0.8 wt. %, and/or the whole polymeric material has a chlorine content of < 1500 wt. ppm, preferably < 900 wt. ppm.

12. Polymeric material according to one of the previous claims, **characterised in that** in the halogen-free flame retardant dispersion aids are contained in a quantity of 0.01 to 10 wt. %, preferably in a quantity of 0.1 to 5.0 wt. %, wherein the dispersion aid is preferably selected from fatty acid amides, including fatty acid monoamides, fatty acid bisamides, and fatty acid alkanolamides such as oleamides and erucamides, from fatty acid esters, including glycerine esters and wax esters, from C16 to C 18 fatty acids, from fatty acid alcohols, including cetyl and stearyl fatty acid alcohols, from natural and synthetic waxes, polyethylene waxes and oxidised polyethylene waxes and from metal stearates, preferably Ca, Zn, Mg, Ba, Al, Cd and Pb stearates.

13. Polymeric material according to one of the previous claims, **characterised in that** the halogen-free flame retardant has a free water content (moisture content) of < 0.6 wt. %, preferably < 0.4 wt. %.

## Revendications

1. Matériau polymère comprenant un agent ignifuge sans halogène encastré dans la matrice polymère, l'agent ignifuge contenant au moins les constituants A et B suivants :
A : les polyphosphate(s) d'ammonium de la forme cristalline II et/ou ses(leurs) dérivés, qui sont des particules revêtues de mélamine, de résine mélaminique, de dérivés de mélamine, de silanes, de siloxanes ou de polystyrols et/ou des particules revêtues de mélamine, de résine mélaminique, de dérivés de mélamine, de silanes, de siloxanes ou de polystyrols et réticulées,
B : un dérivé oligomère ou polymère de la 1,3,5-triazine ou des mélanges de plusieurs d'entre eux de la formule générale 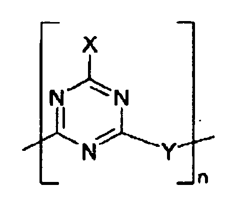
X étant un résidu morpholino, un résidu pipéridino ou un groupe dérivé de la pipérazine,
Y étant un groupe divalent dérivé de la pipérazine et
n étant un nombre entier supérieur à 2,
et au moins un composé sélectionné parmi les constituants C et D suivants :
C : les phosphates, les pyrophosphates, les polyphosphates, les phosphonates organiques et anorganiques, les phosphinates organiques et anorganiques, les stannates, les molybdates ou les borates des éléments des groupes principaux II, III, IV ou des éléments des sous-groupes Fe, Zn, Ti, Mn, Zr, Mo,
D : les dérivés précondensés de mélamine, les sels et adduits de mélamine, le phosphate d'éthylènediamine, le phosphate de pipérazine, le polyphosphate de pipérazine, l'isocyanurate de 1,3,5-trihydroxyéthyle, l'isocyanurate de 1,3,5-triglycidyle, l'isocyanurate de triallyle,
le rapport en poids constituant A/constituant B allant de 10:1 à 1:1 et la somme des constituants A et B représentant 60 à 99% en poids et la somme des constituants C et D représentant 1 à 40% en poids du poids total des constituants A, B, C et D,
le matériau polymère étant un élastomère thermoplastique (TPE).

2. Matériau polymère selon la revendication 1, **caractérisé en ce qu'**il contient l'agent ignifuge sans halogène dans une quantité allant de 5 à 60% en poids, de préférence dans une quantité allant de 10 à 40% en poids.

3. Matériau polymère selon l'une quelconque des revendications précédentes, **caractérisé en ce que** l'élastomère thermoplastique (TPE) est choisi parmi les élastomères thermoplastiques à base d'oléfine (TPO), les élastomères thermoplastiques réticulés à base d'oléfine, les uréthanes (TPU), les polyester et copolyester (TPC), les copolymères à blocs styrène (TPS), les polyamides et les copolyamides (TPA).

4. Matériau polymère selon l'une quelconque des revendications précédentes, **caractérisé en ce que** l'élastomère thermoplastique est choisi parmi les copolymères à blocs styrène (TPS), de préférence parmi les copolymères à blocs styrène SBS (styrène-butadiène-styrène), SEBS (styrène-éthylène-butylène-styrène), SEPS (styrène-éthylène-propylène-styrène), SEEPS (styrène-éthylène-éthylène-propylène-styrène) et MBS (méthacrylate-butadiène-styrène).

5. Matériau polymère selon l'une quelconque des revendications précédentes, **caractérisé en ce que** le matériau polymère contient des charges choisies de préférence parmi le carbonate de calcium, le silicate, le talc, l'argile, le mica, le dioxyde de silicium, le sulfate de calcium, le sulfate de baryum, l'hydroxyde d'aluminium, les fibres et billes de verre, la farine de bois, la poudre de cellulose, le noir de carbone et le graphite.

6. Matériau polymère selon l'une quelconque des revendications précédentes, **caractérisé en ce que** dans l'agent ignifuge sans halogène, la part de revêtement des polyphosphates d'ammonium et/ou de leurs dérivés selon le constituant A est de 0,1 à 20% en poids, de préférence de 1 à 10% en poids rapporté au poids total des polyphosphates d'ammonium et/ou de leurs dérivés revêtus.

7. Matériau polymère selon l'une quelconque des revendications précédentes, **caractérisé en ce que** dans l'agent ignifuge sans halogène, les polyphosphates d'ammonium et/ou leurs dérivés revêtus selon le constituant A y compris le revêtement présentent une taille de particule moyenne D50 allant de 5 à 30 µm, de préférence de 5 à 20 µm.

8. Matériau polymère selon l'une quelconque des revendications précédentes, **caractérisé en ce que** dans l'agent ignifuge sans halogène, le dérivé de la 1,3,5-triazine selon le constituant B est choisi parmi les oligomères et polymères de la 2-pipérazinyle-4-morpholino-1,3,5-triazine et de la 2-pipérazinyle-4-pipéridino-1,3,5-triazine et des combinaisons des composés précédemment cités.

9. Matériau polymère selon l'une quelconque des revendications précédentes, **caractérisé en ce que** dans l'agent ignifuge sans halogène, le constituant C est sélectionné parmi le monophosphate de zinc, le borate de zinc, le triphosphate de zinc, le pyrophosphate de zinc, le polyphosphate de zinc, l'hydroxystannate de zinc, le stannate de zinc, le phosphate de bore, le monophosphate d'aluminium, le triphosphate d'aluminium, le métaphosphate d'aluminium et leurs mélanges.

10. Matériau polymère selon l'une quelconque des revendications précédentes, **caractérisé en ce que** dans l'agent ignifuge sans halogène, le constituant D est choisi parmi le melem, le melon, le melam, le cyanurate de mélamine, le borate de mélamine, l'orthophosphate de mélamine, le pyrophosphate de mélamine, le pyrophosphate de dimélamine et le polyphosphate de mélamine.

11. Matériau polymère selon l'une quelconque des revendications précédentes, **caractérisé en ce que** dans l'agent ignifuge sans halogène, le constituant B comprend une teneur en chlore < 1 % en poids, de préférence < 0,8% en poids et/ou la totalité du matériau polymère comprend une teneur en chlore < 1500 ppm en poids, de préférence < 900 ppm en poids.

12. Matériau polymère selon l'une quelconque des revendications précédentes, **caractérisé en ce que** dans l'agent ignifuge sans halogène, des agents dispersifs sont contenus dans une quantité de 0,01 à 10% en poids, de préférence dans une quantité de 0,1 à 5,0% en poids, les agents dispersifs étant choisis de préférence parmi les amides d'acide gras, y compris les monoamides d'acide gras, les bisamides d'acide gras et les alkanolamides d'acide gras, comme les oléomides et les érucamides, parmi les esters d'acide gras, y compris les esters de glycérol et les esters de cire, parmi les acides gras C16 à C18, parmi les alcools d'acide gras, y compris les alcools d'acide gras cétyliques et stéaryliques, parmi les cires naturelles et synthétiques, les cires de polyéthylène et les cires oxydées de polyéthylène et parmi les stéarates métalliques, de préférence les stéarates de Ca, Zn, Mg, Ba, Al, Cd et Pb.

13. Matériau polymère selon l'une quelconque des revendications précédentes, **caractérisé en ce que** l'agent ignifuge sans halogène comprend une teneur en eau libre (teneur en humidité) < 0,6% en poids, de préférence < 0,4% en poids.
